# EUROPÄISCHE PATENTANMELDUNG

(11) **EP 1 486 372 A2**
(43) Veröffentlichungstag der Anmeldung: **15.12.2004**
(21) Anmeldenummer: 04012840.7
(22) Anmeldetag: 29.05.2004
(51) Int. Cl.: B60N 2/48

(54) **Rückenlehne eines Kraftfahrzeugsitzes**

(30) Priorität: 12.06.2003 DE 10326971
(71) Anmelder: DaimlerChrysler AG, 70567 Stuttgart (DE)
(72) Erfinder: Hienz, Johann, 71034 Böblingen (DE); Imschweiler, Andreas, 73732 Esslingen (DE)

(57) **Zusammenfassung**

Die Erfindung betrifft eine Rückenlehne (1) eines Kraftfahrzeugsitzes mit Kopfstützenhülsen (2, 3) zur Aufnahme und Führung der Haltestangenenden (4.1, 4.2) einer Kopfstütze (4) und weiterhin mit Abdeckungen (2.1, 3.1) zur Verkleidung des aus dem Lehnenkörper der Rückenlehne (1) ragenden Bereichs der Kopfstützenhülsen (2, 3). Um eine solche Rückenlehne auf möglichst einfache Weise mit einer Haltevorrichtung besonders zum Einhängen von Taschen oder Jacken zu versehen, weist die Abdeckung (2.1) einen Haken (2.3) auf.

## Beschreibung

Die Erfindung betrifft eine Rückenlehne nach dem Oberbegriff des Hauptanspruchs.

Eine gattungsgemäße Rückenlehne ist aus der DE 201 09 717 U1 bekannt. In der Rückenlehne ist eine Kopfstützenhülse angeordnet, die einen Aufnahmekanal zur Führung und Halterung einer Kopfstützenstange aufweist. Die Kopfstützenhülse ist größtenteils innerhalb des Lehnenkörpers untergebracht und weist bei steil stehender Rückenlehne in Einbaulage ein freies oberes Ende auf, das aus dem Fahrzeugsitz herausragt. Dieser aus der Rückenlehne des Fahrzeugsitzes ragende Bereich der Kopfstützenhülse ist durch eine Abdeckung verkleidet. Zum weiteren technischen Hintergrund wird auf die EP 0844138 B1, DE 19909879 C2 und die NL 1012648 C hingewiesen.

Aufgabe der Erfindung ist es, eine solche Rückenlehne auf möglichst einfache Weise mit einer Vorrichtung zu versehen, an der Gebrauchsgegenstände wie Taschen oder Jacken hängend gehalten werden.

Gelöst wird die Erfindung durch eine Rückenlehne mit den Merkmalen des Anspruchs 1. Eine solche Rückenlehne weist an mindestens einer Kopfstützenhülse eine Abdeckung auf, an der ein Haken ausgebildet ist, der zur Aufhängung von Taschen oder Jacken vorgesehen ist. Der Haken weist mindestens einen Halteschenkel auf, der zur haltenden Aufnahme von Gurten o.ä. gekrümmt ist oder von einer Fläche abragt. Alternativ ist der Haken geknickt ausgeführt und weist mehrere nicht parallele Halteschenkel auf. Die Abdeckung bildet im Wesentlichen die Verkleidung der bei steil stehender Rückenlehne in Einbaulage oberen Abschlußfläche der Kopfstützenhülse, wobei der Einsteckquerschnitt der Kopfstützenstange frei bleibt. Weiterhin kann die Abdeckung die seitlichen Ränder dieser Fläche am aus dem Lehnenkörper ragenden Teil der Kopfstützenhülse verkleiden. Der Haken kann dabei beispielsweise drehbar gelagert oder in die Abdeckung einklappbar gestaltet sein. Weiterhin kann der Haken in zur Abdeckung verschiedenem Material ausgeführt sein.

Eine besondere Ausgestaltung der Rückenlehne weist eine Abdeckung der Kopfstützenhülse auf, deren Haken einteilig angeformt ist. Neben der einfachen und kostengünstigen Herstellbarkeit ist bei einteilig mit der Abdeckung ausgeführtem Haken eine gute Krafteinleitung in die Kopfstützenhülse bei Gebrauch des Haltehakens gegeben. Dabei kann der Haken in einfachster Ausführung beispielsweise mit einem Schenkel aus der Hauptverkleidungsfläche der Abdeckung abragen. Dabei bildet die Verkleidungsfläche der Abdeckung eine Anlagefläche für die zu haltenden Gegenstände, die die Funktion des zweiten Halteschenkels des Hakens erfüllt. Zur besseren Halterung der Gebrauchsgegenstände kann dabei am Endbereich des abragenden Hakens ein den Querschnitt vergrößernden Kopf ausgebildet sein, der beispielsweise das Abrutschen von Gurten verhindert.

Bei einer besonderen Ausführungsform der Rückenlehne ist nur eine der beiden Kopfstützenhülsen mit einer Abdeckung versehen, die einen Haken aufweist. Die andere Abdeckung ist einfacher und kostengünstiger gestaltet. Um Druchbrüche oder Aussparungen an der den Haken aufweisenden Abdeckung zu vermeiden, wird die Abdeckung der arretierungsfreien Kopfstützenhülse der Rückenlehne mit einem Haken versehen. Durch Durchbrüche oder Aussparungen wären aufwendigere formgebende Werkzeuge der Abdeckung erforderlich und die Struktur der Abdeckung geschwächt. Bei dieser Kopfstützenhülse ist kein Schieber zur Lösung der Höhenarretierung der Kopfstütze vorhanden, der entsprechende Durchbrüche oder Aussparungen der Abdeckung erfordert.

Um am Haken der Abdeckung auftretende Kräfte besonders gut über die Kopfstützenhülse in die Struktur der Rückenlehne zu leiten ist die Abdeckung derart gestaltet, dass sie den aus dem Lehnenkörper ragenden Teil der Kopfstützenhülse vollständig abdeckt. Dabei liegt die Abdeckung mit dem größten Teil eines umlaufenden Randes an der Lehnenverkleidung und mit dem Rand des Durchtrittslochs an der Stange der Kopfstütze an. Durch die besonders große Umfassung der Kopfstützenhülse und das Anliegen an der Kopfstützenstange ist eine vorteilhafte Abstützung der Abdeckung an diesen Bauteilen gegeben.

Bei einer Ausführungsform der Rückenlehne ist die Abdeckung abnehmbar auf der Kopfstützenhülse befestigt, wodurch eine einzelne Abdeckung nach Bedarf an verschiedenen Rückenlehnen oder Kopfstützenhülsen positionierbar ist. Weiterhin kann eine abnehmbare Abdeckung getrennt im Zubehörhandel angeboten werden. Die Ausführungsform ist besonders vorteilhaft, wenn die Abdeckung, an der der Haken ausgebildet ist, über einer vorhandenen Abdeckung der Kopfstützenhülse angebracht ist, so dass bei abgenommener Abdeckung die Kopfstützenhülse wieterhin verkleidet ist.

Um die Abdeckung der Kopfstützenhülse möglichst einfach zu befestigen, weist eine Ausführungsform der Rückenlehne eine Kopfstützenhülse auf, welche die Abdeckung mittels einer Verrastung hält. Bei entsprechender Auslegung der Verrastung ist die Abdeckung abnehmbar und sicher gehalten. Beispielsweise ragt ein in Einbaulage oberer sich radial erweiternder Bereich der Kopfstützenhülse aus dem Lehnenkörper heraus und wird von einer kappenförmigen Abdeckung umfaßt, deren Rastnasen sich an der radialen Erweiterung der Kopfstützenhülse abstützen.

Weitere vorteilhafte Ausgestaltungen ergeben sich aus der Zeichnung und deren Beschreibung.

In der Zeichnung ist eine Ausführung einer erfindungsgemäßen Rückenlehne dargestellt. Dabei zeigen:
- Fig. 1: eine perspektivische Ansicht der Rückenlehne,
- Fig. 2: eine perspektivische Ansicht des oberen Bereichs der Rückenlehne mit eingesteckter Kopfstütze und
- Fig. 3: eine Schnittdarstellung der Rückenlehne quer zu ihrer Breite, im Ausführungsbeispiel mit äußerer und innerer Abdeckung.

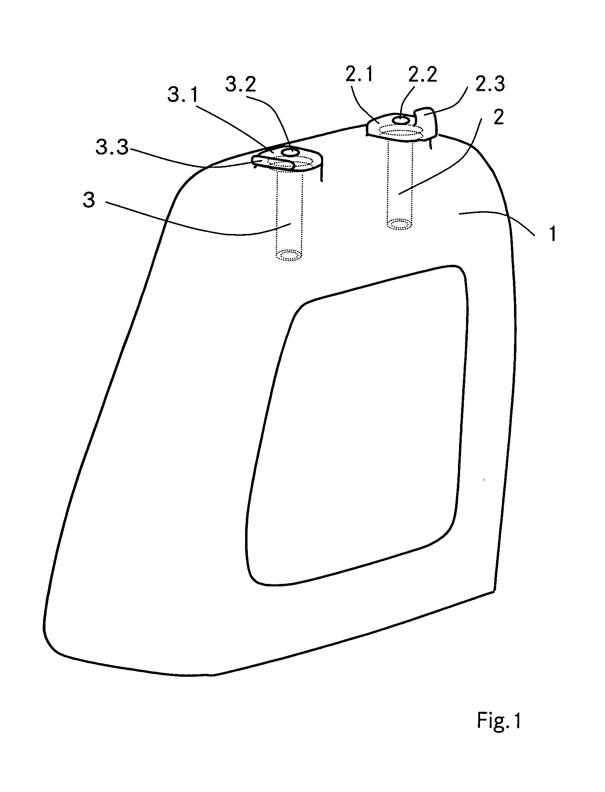

Fig. 1 zeigt eine perspektivische Darstellung einer Ausführungsform einer erfindungsgemäßen Rückenlehne. Die Rückenlehne 1 ist in normaler Sitzgebrauchsstellung gezeigt und ragt in steiler Stellung nach oben. Ein dazugehöriger Fahrzeugsitz ist nicht weiter gezeigt. Weiterhin ist ein innerer Aufbau der Rückenlehne 1 mit Lehnengestell und Polsterung nicht weiter dargestellt. An der oberen Seite der Rückenlehne 1 weist diese zwei Kopfstützenhülsen 2 und 3 auf, die fest mit dem innenliegenden Gestell der Rückenlehne 1 verbunden sind. Die Kopfstützenhülsen 2 und 3 dienen der Aufnahme, Führung und Halterung der beiden Enden der Kopfstützenhaltestange bzw. -stangen. Die Kopfstützenhülsen 2 und 3 sind an ihrem oberen Ende durch je eine Abdeckung 2.1 und 3.1 verkleidet. Die Abdeckungen 2.1 und 3.1 weisen jeweils eine Durchgangsöffnung 2.2 und 3.2 zum Durchstecken der Haltestangenenden auf und umfassen den aus dem Lehnenkörper ragenden Bereich der Kopfstützenhülsen 2 und 3. Die Abdeckungen 2.1 und 3.1 bilden somit eine Verkleidung der oberen Deckfläche der Kopfstützenhülsen 2 und 3 sowie des seitlichen Randes des aus dem Lehnenkörper ragenden Bereichs der Kopfstützenhülsen. Die zur oberen Deckfläche parallele Außenfläche der Abdeckung wird im Folgenden als Hauptverkleidungsfläche bezeichnet.

Eine der beiden Kopfstützenhülsen 3 weist eine Arretiervorrichtung auf, durch welche die Kopfstützenstange 4.2 in der Einstecktiefe einstellbar fixiert ist. Dabei ist die Fixierung über einen seitlich an der Abdeckung 3.1 der Kopfstützenhülse 3 angeordneten Drücker 3.3 zur Einstellung lösbar. An der Abeckung 2.1 der Kopfstützenhülse 2 ist ein Haken 2.3 einteilig angeformt, dessen Halteschenkel von der oberen Hauptverkleidungsfläche der Abdeckung 2.1 nach oben abragt und dabei im von der Sitzfläche abgewandten Endbereich der Hauptverkleidungsfläche der Abdeckung 2.1 angeordnet ist. Die Abdeckung 2.1 umfaßt den oberen Bereich der Kopfstützenhülse 2. Am großen Umfassungsbereich der Abdeckung 2.1 an der Kopfstützenhülse 2 stützt sich die Abdeckung 2.1 zur Weiterleitung der am Haken 2.3 auftretenden Haltekräfte an der Kopfstützenhülse 2 ab. Die Kopfstützenhülse 2 ist mit einem radial erweiterten Bereich auf der Oberseite des Lehnenkörpers aufgesetzt. Die Abdeckung 2.1 weist am unteren Rand ihrer Innenseiten Rastnasen auf, die sich im montierten Zustand am äußeren unteren Rand der radialen Erweiterung der Kopfstützenhülse abstützen und auf diese Weise die Abdeckung halten. Eingehängte Gegenstände oder Gurte liegen einerseits an der Verkleidungsfläche und andererseits am Halteschenkels des Hakens an.

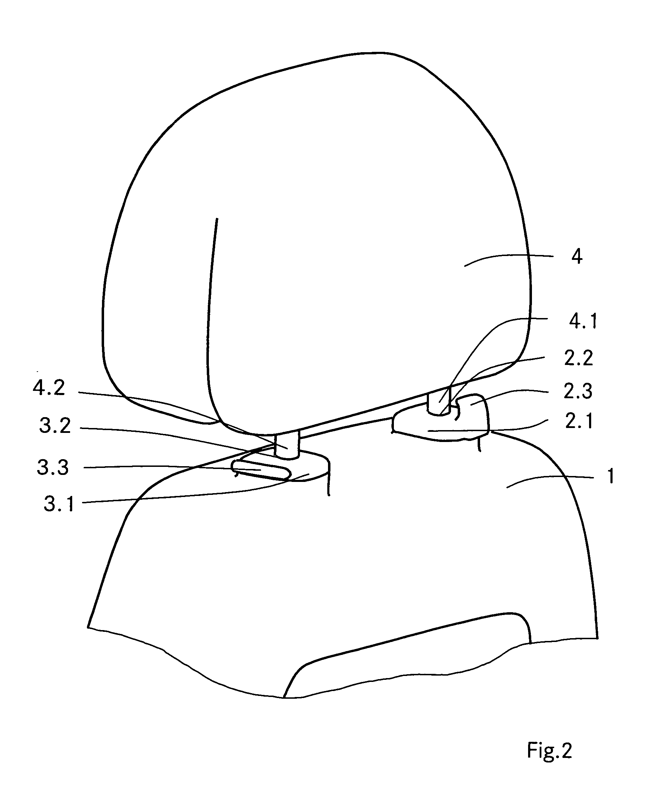

Fig.2 zeigt den oberen Bereich der Rückenlehne 1 mit eingesteckter Kopfstütze 4. Zwei Enden 4.1 und 4.2 einer Kopfstützenstange sind durch Durchgangsöffnungen 2.2 und 3.2 der Abdeckungen 2.1 und 3.1 in hier nicht weiter dargestellte Kopfstützenhülsen eingeschoben. Das Ende 4.2 der Kopfstützenstange weist in seinem eingeschobenen Bereich Rastnuten auf, in die die Arretiervorrichtung der dortigen Kopfstützenhülse greift. Die Arretierung ist über den seitlich an der Abdeckung 3.1 der Kopfstützenhülse angeordneten Drücker 3.3 lösbar. Das Ende 4.1 der Kopfstützenstange ragt durch die Durchgangsöffnung 2.2 der Abdeckung 2.1, die den Haken 2.3 aufweist. Mit dem Rand der Durchgangsöffnung 2.2 stützt sich die Abdeckung 2.1 bei großen Haltekräften am Haken 2.3 zusätzlich zur Abstützung an der Umfassung der Kopfstützenhülse an der Kopfstützenhaltestange 4.1 ab. Der Halteschenkel des Hakens 2.3 ragt von der in der gezeigten Stellung der Rückenlehne 1 nach oben gerichteten Hauptverkleidungsfläche der Abdeckung 2.1 nach oben in Richtung der Kopfstütze 4 ab, die mit ihrem Polster auf den oberen Rand des Hakens 2.3 absenkbar ist. Auf diese Weise kann der Haltebereich des Hakens 2.3 zwischen Verkleidungsfläche der Abdeckung 2.1, Ende 4.1 der Kopfstützenstange, Polster der Kopfstütze 4 und Halteschenkel des Hakens 2.3 geschlossen werden.

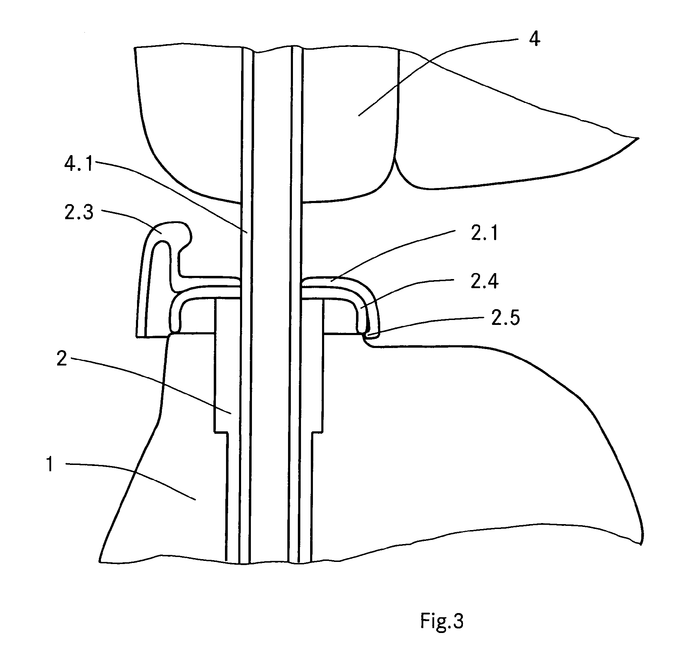

Fig. 3 zeigt einen Schnitt durch die Rückenlehne 1 quer zu ihrer Breite in der Mitte der Kopfstützenhülse 2. Die Rückenlehne 1 ist wie in Fig.1 und Fig.2 in normaler Sitzgebrauchsstellung gezeigt, in der die Lehne in steiler Stellung nach oben ragt. Fig.3 zeigt die Rückenlehne 1 ausschnittsweise in ihrem oberen Bereich. Die Kopfstützenhülse 2 ist mit dem Innengestell der Rückenlehne 1 fest verbunden. Sie weist in ihrem aus dem Lehnenkörper ragenden Bereich eine radiale Erweiterung auf, die als innere Abdeckung 2.4 fungiert und fest mit dem Hülsenkörper verbunden ist. Die innere Abdeckung 2.4 liegt mit ihrem unteren Rand bündig am Lehnenkörper an und ist an diesem Rand durch die dortige Abrundung leicht in radialer Richtung eingezogen.

Die Abdeckung 2.1 weist im zur Rückseite des Fahrzeugsitzes ausgerichteten Endbereich einen Haken 2.3 auf, dessen Halteschenkel von der oberen Hauptverkleidungsfläche abragt. Im oberen Endbereich des Halteschenkels ist dieser zur Hauptverkleidungsfläche hin erweitert, so daß die dortige Halte- und Anlagefläche der Gegenstände oder Gurte gekrümmt ist. Durch die kopfförmige Erweiterung wird ein Abrutschen eingehängter Gegenstände erschwert. Die Abdeckung 2.1 liegt bis auf die Aufweitung des Umfangs im Bereich des Hakens 2.3 in montiertem Zustand fast vollständig umlaufend formschlüssig an der inneren Verkleidung 2.4 an. Am inneren unteren Rand der Abdeckung 2.1 sind bereichsweise nach innen ausgerichtete Rastnasen 2.5 ausgebildet, die sich am radialen Einzug am unteren Rand der inneren Abdeckung 2.4 abstützen. Auf diese Weise ist die Abdeckung 2.1 auf der Kopfstützenhülse abnehmbar und rastend gehalten. Im Bereich der Aufweitung des Umfangs der Abdeckung am Haken 2.3 überragt dieser sowohl die innere Abdeckung 2.4 als auch den Lehnenkörper der Rückenlehne 1. Einerseits können dadurch auch steife Körper wie Kleiderbügel ohne Verklemmen mit dem Lehnenkörper am Haken eingehängt werden. Andererseits kann man zum manuellen Lösen der abnehmbaren Abdeckung von der Kopfstützenhülse unter den Überstand des Hakens greifen. In Sichtrichtung sitzender Fahrzeuginsassen verkleidet die Abdeckung 2.1 den aus dem Lehnenkörper ragenden Bereich der Kopfstützenhülse 2 mit der inneren Abdeckung 2.4 vollständig. Die abnehmbare Abdeckung 2.1 kann je nach Geometrie des oberen Teils der Kopfstützenhülse in verschiedenen Positionen befestigt werden. Weist beispielsweise die innere Abdeckung 2.4 in Einsteckrichtung der Kopfstützenstange einen runden Querschnitt auf, so kann die Abdeckung im montierten Zustand drehbar sein. Das gezeigte Ausführungsbeispiel der Rückenlehne 1 weist eine innere Abdeckung 2.4 mit einem abgerundeten Rechteckquerschnitt auf. Somit ist die Abdeckung 2.1 mit Ausrichtung des Hakens zur Rückseite der Rückenlehne oder mit Ausrichtung zur Sitzfläche hin montierbar. Bei einer Ausrichtung des Hakens 2.3 zur Sitzfläche kann beispielsweise ein Einzelfahrer an der Lehne des Beifahrersitzes Taschen gut erreichbar einhängen.

## Patentansprüche

1. Rückenlehne eines Kraftfahrzeugsitzes mit Kopfstützenhülsen zur Aufnahme und Führung von Haltestangenenden einer Kopfstütze und weiterhin mit Abdeckungen zur Verkleidung der in steiler Gebrauchsstellung der Rückenlehne oberen Abschlußfläche der Kopfstützenhülse
**dadurch gekennzeichnet,**
**dass** an der Abdeckung (2.1) ein Haken (2.3) ausgebildet ist.

2. Rückenlehne nach Anspruch 1,
**dadurch gekennzeichnet,**
**dass** der Haken (2.3) einteilig mit der Abdeckung (2.1) ausgeführt und an dieser angeformt ist.

3. Rückenlehne nach Anspruch 1 oder 2 ,
**dadurch gekennzeichnet,**
**dass** der Haken 2.3 an einer arretierungsfreien Kopfstützenhülse (2) angeordnet ist.

4. Rückenlehne nach einem der Ansprüche 1 bis 3,
**dadurch gekennzeichnet,**
**dass** die Abdeckung (2.1) aus dem Lehnenkörper herausragende Teile der Kopfstützenhülse (2) umfaßt und vollständig abdeckt.

5. Rückenlehne nach einem der Ansprüche 1 bis 4,
**dadurch gekennzeichnet,**
**dass** die Abdeckung (2.1) abnehmbar ist und die Kopfstützenhülse (2) eine weitere innere Abdeckung (2.4) aufweist.

6. Rückenlehne nach Anspruch 5,
**dadurch gekennzeichnet,**
**dass** die Abdeckung (2.1) auf der Kopfstützenhülse (2) und /oder dem Lehnenkörper verrastbar gehalten ist.

7. Abdeckung einer Kopfstützenhülse zur Aufnahme und Führung von Haltestangenenden einer Kopfstütze eines Kraftfahrzeugsitzes, wobei die Abdeckung die in steiler Gebrauchsstellung der Rückenlehne obere Abschlußfläche der Kopfstützenhülse verkleidet,
**dadurch gekennzeichnet,**
**dass** an der Abdeckung (2.1) ein Haken (2.3) ausgebildet ist.
